**Europäisches Patentamt**

**European Patent Office**

**Office européen des brevets**

(19)

(11) Veröffentlichungsnummer : **0 370 159 B1**

(12)

# EUROPÄISCHE PATENTSCHRIFT

(45) Veröffentlichungstag der Patentschrift :
**25.03.92 Patentblatt 92/13**

(51) Int. Cl.$^5$ : **B23B 31/12**

(21) Anmeldenummer : **89101238.7**

(22) Anmeldetag : **25.01.89**

(54) **Selbstspannendes Bohrfutter.**

(30) Priorität : **23.11.88 DE 3839429**

(43) Veröffentlichungstag der Anmeldung :
**30.05.90 Patentblatt 90/22**

(45) Bekanntmachung des Hinweises auf die
Patenterteilung :
**25.03.92 Patentblatt 92/13**

(84) Benannte Vertragsstaaten :
**CH DE ES FR GB IT LI**

(56) Entgegenhaltungen :
**EP-A- 0 043 785**
**EP-A- 0 155 402**

(73) Patentinhaber : **Röhm, Günter Horst**
**Heinrich-Röhm-Strasse 50**
**W-7927 Sontheim (DE)**

(72) Erfinder : **Röhm, Günter Horst**
**Heinrich-Röhm-Strasse 50**
**W-7927 Sontheim (DE)**

(74) Vertreter : **Fay, Hermann, Dipl.-Phys. Dr. et al**
**Ensingerstrasse 21 Postfach 1767**
**W-7900 Ulm (Donau) (DE)**

EP 0 370 159 B1

EP 0 370 159 B1

**Beschreibung**

Die Erfindung betrifft ein selbstspannendes Bohrfutter zum Betrieb an einer Schlagbohrspindel, mit Futterbacken, einem die Futterbacken geneigt zur Futterachse führenden Backenführungsteil und einem ein Spanngewinde zum Verstellen der Futterbacken tragenden, drehschlüssig von der Schlagbohrspindel mitgenommenen Spanngewindeteil, wobei das Backenführungsteil und das Spanngewindeteil gegenseitig verdrehbar aneinander geführt und axial kraftschlüssig gegeneinander abgestützt sind.

Bohrfutter dieser Art sind in den Patentanmeldungen EP-A-302992 und EP-A-33/867, die unter Artikel 54 (3) EPÜ fallen, beschrieben.

Bei dem Bohrfutter nach der Patentanmeldung EP-A-302992 ist das Spanngewindeteil von einem Futterkörper gebildet, der eine parallel zur Führungsrichtung der Futterbacken verlaufende Kegelfläche besitzt, auf der sich das Spanngewinde befindet, das an jeder Futterbacke mit einer Zahnreihe im Eingriff steht. Eine am Futterkörper drehbar gelagerte und gegen Axialverschiebungen festgehaltene Spannhülse bildet das Backenführungsteil. Zur Begrenzung der Nachspannung ist ein Sperring am Futterkörper gegen eine Feder jeweils zwischen zwei Endstellungen verdrehbar und axial verschiebbar angeordnet. Der Sperring steht unter der Federkraft über eine Verzahnung mit der Spannhülse in Umfangsrichtung im Eingriff. Zur Drehbegrenzung des Sperrings selbst greift ein am Futterkörper fester Anschlagstift in eine Ausnehmung des Sperrings.

Bei dem Bohrfutter nach der Patentanmeldung EP-A-331 867 ist das Backenführungsteil von einem Futterkörper gebildet, an dem drehbar und axial unverschiebbar eine das Spanngewindeteil bildende Spannhülse gelagert ist. Das Spanngewinde der Spannhülse steht an jeder Futterbacke mit einer Zahnreihe im Eingriff. Auch hier kann ein Sperring zwischen dem Futterkörper und der Spannhülse zur Begrenzung der Nachspannbegrenzung vorgesehen sein.

In beiden Fällen ist die einteilige, also zugleich die drehende wie auch schlagende Bewegung ausführende Schlagbohrspindel sowohl dreh- als auch schlagschlüssig am Spanngewindeteil angeschlossen. Das Spanngewindeteil wird daher von der Schlagbohrspindel nicht nur drehschlüssig mitgenommen, sondern auch unmittelbar mit den axialen Schlägen beaufschlagt, die daher in erster Linie über das Spanngewinde auf die Futterbacken übertragen werden. Diese Belastungsverhältnisse können dazu führen, daß die Nachspannwirkung beim Schlagbohren ein Verklemmen der Futterbacken zwischen dem Backenführungsteil und dem Spanngewindeteil ergibt und daß das Bohrfutter dann nicht mehr oder nur noch sehr schwer wieder geöffnet werden kann.

Der Erfindung liegt die Aufgabe zugrunde, ein Bohrfutter der eingangs genannten Art so auszubilden, daß ein Verklemmen der Futterbacken und eine Blockierung des Bohrfutters als Folge der Nachspannwirkung beim Schlagbohren vermieden wird.

Diese Aufgabe wird bei einem Bohrfutter der eingangs genamten Art dadurch gelöst, daß das Spanngewindeteil gegenüber der Schlagbohrspindel ein axiales Bewegungsspiel aufweist und das Backenführungsteil einen Anschlag besitzt, der die axiale Verschiebung der Schlagbohrspindel am Backenführungteil innerhalb des axialen Bewegungsspiels des Spanngewindeteils begrenzt.

Diese Ausbildung des Bohrfutters führt dazu, daß in jeweils erster Linie die Drehbewegung der Schlagbohrspindel auf das Spanngewindeteil und ihre Schlagbewegung auf das Backenführungsteil übertragen werden. Daher gehen die Schlagimpulse über das Backenführungsteil direkt auf die Futterbacken. Das Spanngewindeteil und mit ihm sein Spanngewinde werden somit anders und erheblich geringer durch die Schlagimpulse belastet, als wenn die Schlagimpulse über das Spanngewindeteil in das Bohrfutter eingeleitet werden. Diese Unterschiede führen im Ergebnis dazu, daß die Futterbacken zwischen dem Spanngewindeteil und dem Backenführungsteil nicht verklemmen. Das Spanngewinde blockiert nicht und das Bohrfutter kann aus dem nachgespannten Zustand ohne Schwierigkeiten gelöst und geöffnet werden.

In besonders einfacher Ausführungsform sitzt das Spanngewindeteil unmittelbar auf der Schlagbohrspindel, die am Anschlag des Backenführungsteils zur Anlage kommen.

Es kann sich aber auch empfehlen, daß die Schagbohrspindel dreh- und schlagschlüssig an einem Spindelanschlußteil befestigt ist, an dem das Spanngewindeteil drehschlüssig mit dem axialen Bewegungsspiel sitzt und das am Anschlag des Backenführungsteils zur Anlage kommt.

Ein weiterer Vorschlag der Erfindung geht dahin, daß der Anschlag am Backenführungteil in Schlagrichtung (zum Bohrer hin) axial mit möglichst großem Abstand vor der Stelle der spannkraftschlüssigen Abstützung des Spanngewindeteils am Backenführungsteil liegt. Je größer dieser Abstand ist, in umso geringerem Maße findet eine Überleitung der Schlagimpulse vom Backenführungsteil auf das Spanngewindeteil über die axiale Abstützung des letzteren an ersterem statt.

In einer bevorzugten Ausführungsform ist das Spanngewindeteil radial zwischen dem außen liegenden Backenführungsteil und der Schlagbohrspindel bzw. dem Spindelanschlußteil angeordnet. In diesem Fall ergibt sich eine besonders wirkungsvolle Schlagentlastung des Spanngewindes, weil die Fortpflanzung der Schla-

2

gimpulse vom Backenführungsteil auf das Spanngewindeteil in erster Linie über dessen axiale Abstützung am Backenführungsteil läuft und dabei das Spanngewinde zunächst umgangen wird.

Eine in konstruktiver Hinsicht besonders zweckmäßige Ausführungsform ist dadurch gekennzeichnet, daß das Spanngewindeteil durch einen an ihm festsitzenden Querstift mit dem Spindelanschlußteil verbunden ist und die aus dem Spanngewindeteil vorstehenden Enden des Querstifts als drehbegrenzende Anschläge für einen Sperring ausgebildet sind, der am Spanngewindeteil oder Spindelanschlußteil geführt und am Backenführungsteil zu dessen Drehbegrenzung drehschlüssig einkuppelbar ist.

Das Prinzip der Erfindung kann auch bei einem selbstspannenden Bohrfutter verwirklicht werden, das an einer Hammerbohrspindel betrieben wird, die zweiteilig aus einem nur drehenden Teil, z. B. in Form einer Hohlspindel, und einem nur schlagenden Teil, z. B. in Form eines in der Hohlspindel laufenden Döppers, ausgebildet ist.

In diesem Fall betrifft die Erfindung ein selbstspannendes Bohrfutter zum Betrieb an einer Hammerbohrspindel, mit Futterbacken, einem die Futterbacken geneigt zur Futterachse führenden Backenführungsteil und einem ein Spanngewinde zum Verstellen der Futterbacken tragenden Spanngewindeteil, wobei das Backenführungsteil und das Spanngewindeteil gegenseitig verdrehbar aneinander geführt und axialkraftschlüssig gegeneinander abgestützt sind.

Um bei einem solchen Bohrfutter ebenfalls ein Verklemmen der Futterbacken und eine Blockierung des Bohrfutters als Folge der Nachspannwirkung beim Bohrvorgang zu vermeiden, besteht die Erfindung darin, daß das Spanngewindeteil drehschlüssig und mit einem axialen Verschiebungsspiel auf dem drehenden Teil der Hammerbohrspindel sitzt und das Backenführungsteil einen axialen Anschlag für den schlagenden Teil der Hammerbohrspindel aufweist.

Im Ergebnis wird auch hier die Schlagbelastung primär in das Backenführungsteil eingeleitet und das Spanngewindeteil von den Schlagimpulsen entlastet, so daß das Bohrfutter nicht blockiert wird und ohne weiteres aus dem nachgespannten Zustand gelöst und geöffnet werden kann.

Im folgenden wird die Erfindung an in der Zeichnung dargestellten Ausführungsbeispielen näher erläutert; es zeigen:

Fig. 1 einen Axialschnitt durch ein Bohrfutter nach der Erfindung,

Fig. 2 einen Schnitt in Richtung II - II durch das Bohrfutter nach Fig. 1,

Fig. 3 einen Axialschnitt durch eine andere Ausführungsform des erfindungsgemäßen Bohrfutters,

Fig. 4 eine weitere Ausführungsform des erfindungsgemäßen Bohrfutters in einem Axialschnitt.

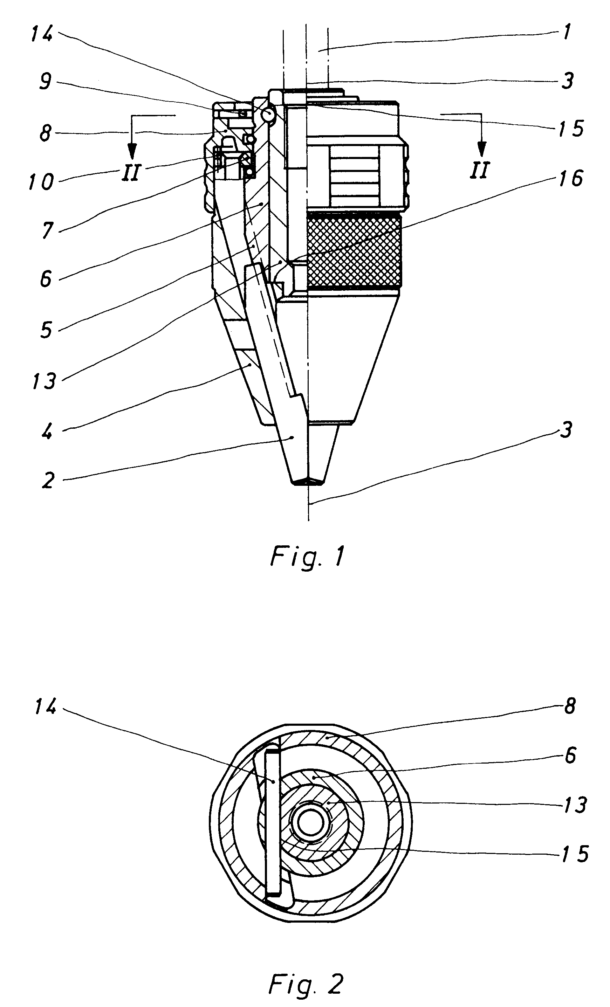

Die aus den Fig. 1 bis 3 ersichtlichen selbstspannenden Bohrfutter sind zum Betrieb an einer Schlagbohrspindel 1 bestimmt, die einteilig ausgebildet ist, also zugleich die drehende wie auch die schlagende Bewegung ausführt. Die Bohrfutter besitzen Futterbacken 2, ein die Futterbacken geneigt zur Futterachse 3 führrendens Backenführungsteil 4 und ein ein Spanngewinde 5 zum Verstellen der Futterbacken 2 tragendes Spanngewindeteil 6, das drehschlüssig von der Schlagbohrspindel 1 mitgenommen wird. Das Backenführungsteil 4 und das Spanngewindeteil 6 sind gegenseitig verdrehbar aneinander geführt und bei jeweils 7 axial kraftschlüssig gegeneinander abgestützt. Diese kraftschlüssige Abstützung 7 dient dazu, die sich bei der Spannung der Futterbacken 2 ergebende Reaktionskraft auf das Spanngewindeteil 6 gegen das Backenführungsteil 4 abzufangen, so daß sich der aus den Spannkräften ergebende Kraftschluß zwischen dem Spanngewindeteil 6 und dem Backenführungsteil 4 schließen kann.

Im einzelnen ist bei dem Bohrfutter nach den Fig. 1 und 2 das Spanngewindeteil 6 von einem Futterkörper gebildet, der eine Kegelfläche aufweist, die parallel zur Führungsrichtung der Futterbacken 2 verläuft, die ihrerseits zur Futterachse 3 geneigt ist. Auf dieser Kegelfläche befindet sich das Spanngewinde 5, das an jeder Futterbacke 2 mit einer Querverzahnung im Eingriff steht. Eine am Futterkörper drehbar gelagerte Spanhülse bildet das Backenführungsteil 4, das mit Führungsbohrungen versehen ist, in dem die Futterbacken 2 verschiebbar geführt sind. Zur Begrenzung der Nachspannung ist ein Sperring 8 vorgesehen, der am Spanngewindeteil 6 gegen eine Feder 9 jeweils zwischen zwei Endstellungen verdrehbar und axial verschiebbar angeordnet ist. Unter der Federkraft steht der Sperring 8 über eine Verzahnung 10 mit dem Backenführungsteil 4 in Umfangsrichtung im Eingriff.

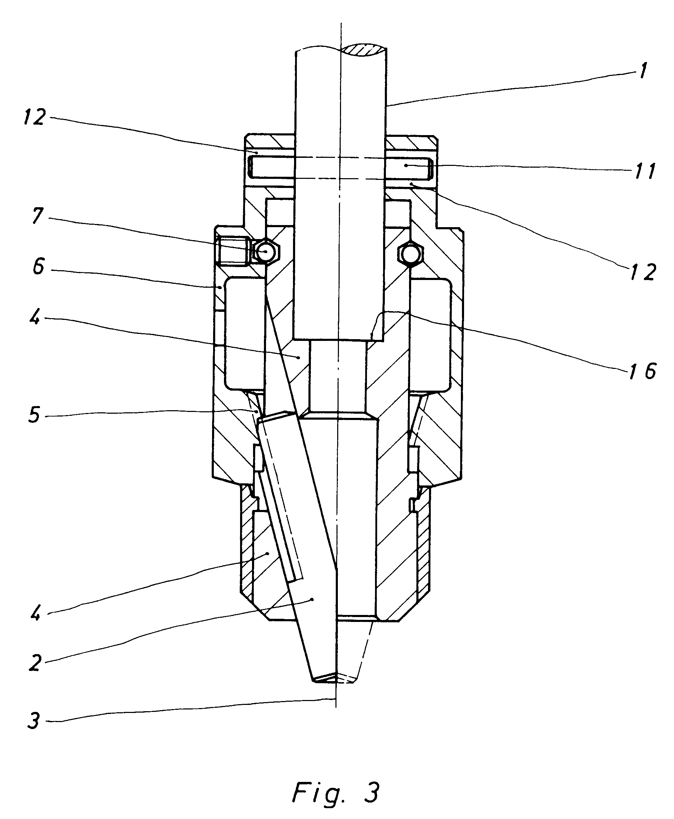

Bei dem Bohrfutter nach Fig. 3 ist das Backenführungsteil 4 von einem Futterkörper gebildet, an dem drehbar eine das Spanngewindeteil 6 bildende Spannhülse gelagert ist. Das Spanngewinde 5 der Spannhülse steht an jeder Futterbacke 2 wiederum mit einer Zahnreihe im Eingriff. Im übrigen kann auch hier, wie in der Zeichnung aber nicht dargestellt, ein Sperring vorgesehen sein, der vergleichbar wie in den Fig. 1 und 2 zwischen dem Futterkörper und der Spannhülse zur Begrenzung der Nachspannwirkung angeordnet ist.

Das Spanngewindeteil 6 besitzt gegenüber der Schlagbohrspindel 1 ein axiales Bewegungsspiel. Im Ausführungsbeispiel nach Fig. 3 ist dazu in der Schlagbohrspindel 1 ein Querstift 11 vorgesehen, der im Spanngewindeteil 6 in Ausnehmungen 12 greift, die in Umfangsrichtung die Mitnahme des Backenführungsteils 6 durch die Schlagbohrspindel 1 sicherstellen, in Axialrichtung aber im Vergleich über den Durchmesser des Querstiftes 11 verlängert sind, so daß sich der Querstift 11 um das gewünschte axiale Bewegungsspiel der Bohrspindel 1 gegenüber dem Spanngewindeteil in den Ausnehmungen 12 verschieben kann. Im Ausführungsbeispiel nach den Fig. 1 und 2 ist dagegen die Schlagbohrspindel 1 dreh- und schlagschlüssig an einem Spindelanschlußteil 13 befestigt, an dem das Spanngewindeteil 6 drehschlüssig mit dem axialen Bewegungsspiel sitzt. Die Verbindung zwischen dem Spanngewindeteil 6 und dem Spindelanschlußteil 13 erfolgt mit Hilfe eines Querstifts 14, der fest am Spanngewindeteil 6 sitzt und durch eine Ausnehmung 15 im Spindelanschlußteil 13 greift, die in Axialrichtung gegenüber dem Durchmesser des Querstifts 14 verlängert ist, so daß auch hier das gewünschte axiale Bewegungsspiel vorhanden ist, während sich in Drehrichtung eine kraft- und formschlüssige Mitnahme des Spanngewindeteils 6 durch das Spindelanschlußteil 13 ergibt. Die aus dem Spanngewindeteil 6 vorstehenden Enden des Querstiftes 14 dienen als drehbegrenzende Anschläge für den Sperring 8, der im Ausführungsbeispiel am Spanngewindeteil 6, in anderer Ausführungsmöglichkeit aber auch unmittelbar am Spindelanschlußteil 13 geführt sein kann und am Backenführungsteil 4 zu dessen Drehbegrenzung in schon näher erläuterter Weise drehschlüssig einkuppelbar ist.

In allen Ausführungsbeispielen besitzt weiter das Backenführungsteil 4 einen Anschlag 16, der die axiale Verschiebung der Schlagbohrspindel 1 am Backenführungsteil 4 innerhalb des axialen Bewegungsspiels begrenzt, das Spanngewindeteil 6 gegenüber der Schlagbohrspindel 1 besitzt. Im Ausführungsbeispiel nach Fig. 3 sitzt das Spanngewindeteil 6 unmittelbar an der Schlagbohrspindel 1, die am Anschlag 16 des Backenführungsteils 4 zur Anlage kommt. Im Ausführungsbeispiel nach den Fig. 1 und 2 dagegen sitzt das Spanngewindeteil 6 drehschlüssig und mit dem gewünschten axialen Bewegungsspiel am Spindelanschlußteil 13, das am Anschlag 16 des Backenführungsteils 4 zur Anlage kommt. Dabei ist im übrigen das Spanngewindeteil 6 radial zwischen dem außen liegenden Backenführungsteil 4 und dem inneren Spindelanschlußteil 13 angeordnet. Die Schlagimpulse werden daher vom Spindelanschlußteil 13 über den Anschlag 16 unmittelbar in das Backenführungsteil 4 übertragen und pflanzen sich von dort unter Umgehung des Spanngewindes 5 über die axiale Abstützung des Backenführungsteils 4 bei 7 in das Spanngewindeteil 6 fort, was eine besonders wirksame Entlastung des Spanngewindes 5 von den Schlagimpulsen zur Folge hat.

Im übrigen zeigen die Fig. 1 und 2 ein Ausführungsbeispiel, bei dem der Anschlag 16 am Backenführungsteil 4 in Schlagrichtung, d. h. zum nicht dargestellten Bohrer hin, axial weit vor der Stelle 7 der spannkraftschlüssigen Abstützung des Spanngewindeteils 6 am Backenführungsteil 4 liegt. Je größer dieser Abstand ist, umso geringer ist die Überleitung der Schlagimpulsenergie vom Backenführungsteil 4 unmittelbar auf das Spanngewindeteil 6 über die axiale Abstützung 7 zwischen dem Backenführungsteil 4 und dem Spanngewindeteil 6.

Das axiale Bewegungsspiel zwischen dem Spanngewindeteil 6 und der Schlagbohrspindel 1 bzw. dem Spindelanschlußteil 13 hat zur Folge, daß die Schlagbewegung der Schlagbohrspindel 1 direkt auf das Backenführungsteil 4 übertragen wird, während die Drehbewegung der Schlagbohrspindel 1 sich auf das Spanngewindeteil 6 überträgt. Daher gehen die Schlagimpulse über das Backenführungsteil 4 unmittelbar in die Futterbacken 2. Das Spanngewindeteil 6 und das Spanngewinde 5 selbst werden somit von den Schlagimpulsen weniger belastet, was im Ergebnis dazu führt, daß sich die Futterbacken 2 zwischen dem Spanngewindeteil 6 und dem Backenführungsteil 4 nicht verklemmen.

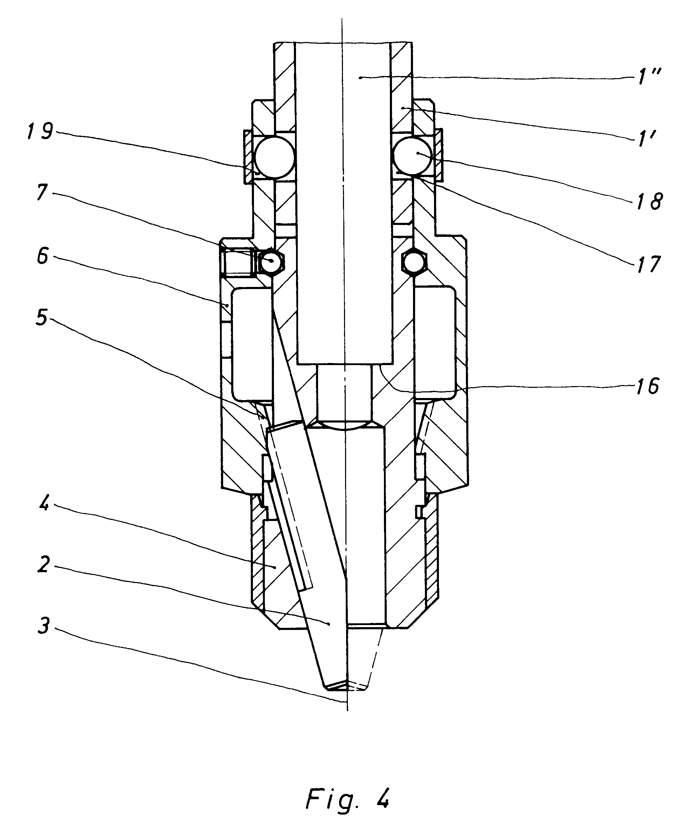

Fig. 4 zeigt ein selbstspannendes Bohrfutter zum Betrieb an einer Hammerbohrspindel, die aus einem drehenden Spindelteil 1′ in Form einer Hohlwelle und einem schlagenden Spindelteil 1″ in Form eines in der Hohlwelle axial verschiebbar geführten Döppers besteht. Auch hier sind die Futterbacken 2 geneigt zur Futterachse 3 in einem Backenführungsteil 4 geführt. Zum Verstellen der Futterbacken 2 dient wiederum ein Spanngewinde 5 an einem Spanngewindeteil 6. Das Backenführungsteil 4 und das Spanngewindeteil 6 sind gegenseitig verdrehbar aneinander geführt und wiederum bei 7 spannkraftschlüssig axial gegeneinander abgestützt. Das Spanngewindeteil 6 sitzt drehschlüssig und mit einem axialen Verschiebungsspiel auf dem drehenden Teil 1′ der Hammerbohrspindel, wozu in Aufnahmen 17 des drehenden Spindelteils 1′ Kupplungskugeln 18 eingelegt sind, die in entsprechende Aufnahmen 19 des Spanngewindeteils 6 greifen, die im Vergleich zum Kugeldurchmesser axial verlängert sind, so daß sich das Spanngewindeteil 6 an dem drehenden Teil 1′ der Hammerbohrspindel entsprechend axial verschieben kann. Auch hier besitzt das Backenführungsteil 4 einen axialen Anschlag 16, an dem der schlagende Teil 1″ der Hammerbohrspindel zur Anlage kommt. Auch hier geht die Schlagbeanspruchung unmittelbar auf das Backenführungsteil 4, wobei das Spanngewindeteil 6 wegen seines axial verschieblichen Anschlusses am drehenden Spindelteil 1′ von der Schlagbeanspruchung weitgehend entlastet bleibt.

**Patentansprüche**

1. Selbstspannendes Bohrfutter zum Betrieb an einer Schlagbohrspindel (1), mit Futterbacken (2), einem die Futterbacken (2) geneigt zur Futterachse (3) führenden Backenführungsteil (4) und einem ein Spanngewinde (5) zum Verstellen der Futterbacken (2) tragenden, drehschlüssig von der Schlagbohrspindel (1) mitgenommenen Spanngewindeteil (6), wobei das Backenführungsteil (4) und das Spanngewindeteil (6) gegenseitig verdrehbar aneinander geführt und axial kraftschlüssig gegeneinander abgestützt sind, dadurch gekennzeichnet, daß das Spanngewindeteil (6) gegenüber der Schlagbohrspindel (1) ein axiales Bewegungsspiel aufweist und das Backenführungsteil (4) einen Anschlag (16) besitzt, der die axiale Verschiebung der Schlagbohrspindel (1) am Backenführungsteil (4) innerhalb des axialen Bewegungsspiels des Spanngewindeteils (6) begrenzt.

2. Bohrfutter nach Anspruch 1, dadurch gekennzeichnet, daß das Spanngewindeteil (6) umittelbar an der Schlagbohrspindel (1) sitzt, die am Anschlag (16) des Backenführungsteils (4) zur Anlage kommt.

3. Bohrfutter nach Anspruch 1, dadurch gekennzeichnet, daß die Schlagbohrspindel (1) dreh- und schlagschlüssig an einem Spindelanschlußteil (13) befestigt ist, an dem das Spanngewindeteil (6) drehschlüssig mit dem axialen Bewegungsspiel sitzt und das am Anschlag (16) des Backenführungsteils (4) zur Anlage kommt.

4. Bohrfutter nach einem der Ansprüche 1 bis 3, dadurch gekennzeichnet, daß der Anschlag (16) am Backenführungsteil (4) in Schlagrichtung (zum Bohrer hin) axial mit möglichst großem Abstand vor der Stelle (7) der spannkraftschlüssigen Abstützung des Spanngewindeteils (4) am Backenführungsteil (6) liegt.

5. Bohrfutter nach einem der Ansprüche 1 bis 4, dadurch gekennzeichnet, daß das Spanngewindeteil (6) radial zwischen dem außenliegenden Backenführungsteil (4) und der Schlagbohrspindel (1) bzw. dem Spindelanschlußteil (13) angeordnet ist.

6. Bohrfutter nach den Ansprüchen 3 und 5, dadurch gekennzeichnet, daß das Spanngewindeteil (6) durch einen an ihm festsitzenden Querstift (14) mit dem Spindelanschlußteil (13) verbunden ist und die aus dem Spanngewindeteil (6) vorstehenden Enden des Querstifts (14) als drehbegrenzende Anschläge für einen Sperring (8) ausgebildet sind, der am Spanngewindeteil (6) oder Spindelanschlußteil (13) geführt und am Backenführungsteil (4) zu dessen Drehbegrenzung drehschlüssig einkuppelbar ist.

7. Selbstspannendes Bohrfutter zum Betrieb an einer Hammerbohrspindel, mit Futterbacken (2), einem die Futterbacken (2) geneigt zur Futterachse (3) führenden Backenführungsteil (4) und einem ein Spanngewinde (5) zum Verstellen der Futterbacken (2) tragenden Spanngewindeteil (6), wobei das Backenführungsteil (4) und das Spanngewindeteil (6) gegenseitig verdrehbar aneinander geführt und spannkraftschlüssig gegeneinander abgestützt sind, dadurch gekennzeichnet, daß das Spanngewindeteil (6) drehschlüssig und mit einem axialen Verschiebungsspiel auf dem drehenden Teil (1′) der Hammerbohrspindel sitzt und das Backenführungsteil (4) einen axialen Anschlag (16) für den schlagenden Teil (1″) der Hammerbohrspindel aufweist.


## Claims

1. Self-locking drill chuck for operation on a percussion drill spindle (1), with chuck jaws (2), a jaw guide part (4) guiding the chuck jaws (2) obliquely to the chuck axis (3), and a clamping thread part (6), which carries a clamping thread (5) for adjusting the chuck jaws (2) and which is fixed to the percussion drill spindle (1) so as to rotate in association therewith, wherein the jaw guide part (4) and the clamping thread part (6) are guided mutually rotatably on one another and bear against one another with axial non-positive locking, characterised in that the clamping thread part (6) has axial lost motion with respect to the percussion drill spindle (1) and the jaw guide part (4) has a stop (16), which limits the axial displacement of the percussion drill spindle (1) on the jaw guide part (4) within the axial lost motion of the clamping thread part (6).

2. Drill chuck according to claim 1, characterised in that the clamping thread part (6) rests directly on the percussion drill spindle (1), which comes to rest on the stop (16) of the jaw guide part (4).

3. Drill chuck according to claim 1, characterised in that the percussion drill spindle (1) is fixed rotationally and percussively to a spindle joining piece (13), on which the clamping thread part (6) rests non-rotatably with the axial lost motion and which comes to rest on the stop (16) of the jaw guide part (4).

4. Drill chuck according to one of claims 1 to 3, characterised in that the stop (16) on the jaw guide part (4) is located with the maximum possible distance, axially in the direction of percussion (with respect to the drill), in front of the place (7) where the clamping thread part (4) bears on the jaw guide part (6) with clamping non-positive locking.

5. Drill chuck according to one of claims 1 to 4, characterised in that the clamping thread part (6) is located radially between the outermost jaw guide part (4) and the percussion drill spindle (1) or the spindle joining piece (13).

6. Drill chuck according to claims 3 and 5, characterised in that the clamping thread part (6) is connected, by a transverse pin (14) fixed therein, to the spindle joining piece (13) and the ends of the transverse pin (14) projecting from the clamping thread part (6) are formed as rotation-limiting stops for a locking ring (8), which is guided on the clamping thread part (6) or spindle joining piece (13) and is engageable with the jaw guide part (4) in a rotationally fixed manner in order to limit its rotation.

7. Self-locking drill chuck for operation on a hammer drill spindle, with chuck jaws (2), a jaw guide part (4) guiding the chuck jaws (2) obliquely to the chuck axis (3) and with a clamping thread part (6) carrying a clamping thread (5) for adjusting the chuck jaws (2), wherein the jaw guide part (4) and the clamping thread part (6) are guided on one another so as to be mutually rotatable and bear against one another with clamping non-positive locking, characterised in that the clamping thread part (6) rests non-rotatably and with axial displacement clearance on the rotary part (1') of the hammer drill spindle and the jaw guide part (4) has an axial stop (16) for the percussive part (1″) of the hammer drill spindle.

**Revendications**

1. Mandrin de perceuse à serrage automatique destiné à être installé sur une broche de perceuse à percussion (1), comportant des mâchoires (2), une partie (4) de guidage des mâchoires, qui sert à guider les mâchoires (2) du mandrin dans une position inclinée par rapport à l'axe (3) de ce dernier, et une partie filetée de serrage (6), qui possède un filetage de serrage (5) destiné à déplacer les mâchoires (2) du mandrin et est entraîné, d'une manière bloquée en rotation, par la broche de perceuse à percussion (1), la partie (4) de guidage des mâchoires et la partie filetée de serrage (6) étant guidées l'une sur l'autre de manière à pouvoir tourner l'une par rapport à l'autre et prenant appui axialement l'une sur l'autre selon une liaison de force, caractérisé en ce que la partie filetée de serrage (6) possède, par rapport à la broche de perceuse à percussion (1), un jeu axial de déplacement et que la partie (4) de guidage des mâchoires possède une butée (16), qui limite le déplacement axial de la broche de perceuse à percussion (1) sur la partie (4) de guidage des mâchoires, dans les limites du jeu axial de déplacement de la partie filetée de serrage (6).

2. Mandrin de perceuse selon la revendication 1, caractérisé en ce que la partie filetée de serrage (6) est en appui directement sur la broche de perceuse à percussion (1), qui vient s'appliquer contre la butée (16) de la partie (4) de guidage des mâchoires.

3. Mandrin de perceuse selon la revendication 1, caractérisé en ce que la broche de perceuse à percussion (1) est fixée avec blocage en rotation et de manière à transmettre les chocs sur une partie de raccordement de broche (13), sur laquelle la partie filetée de serrage (6) prend appui selon une liaison avec blocage en rotation, tout en permettant le jeu axial de déplacement, et qui s'applique sur la butée (16) de la partie (4) de guidage des mâchoires.

4. Mandrin de perceuse selon l'une des revendications 1 à 3, caractérisé en ce que la butée (16) présente sur la partie (4) de guidage des mâchoires est située en étant distante axialement, dans la direction d'application des chocs (en direction du foret), sur une distance axiale aussi grande que possible, en avant de la zone (7) d'appui, selon une liaison de transmission de la force de serrage, de la partie filetée de serrage (4) sur la partie (6) de guidage des mâchoires.

5. Mandrin de perceuse selon l'une des revendications 1 à 4, caractérisé en ce que la partie filetée de serrage (6) est disposée radialement entre la partie extérieure (4) de guidage des mâchoires et la broche de perceuse à percussion (1) ou la partie (13) de raccordement de la broche.

6. Mandrin de perceuse selon les revendications 3 et 5, caractérisé en ce que la partie filetée de serrage (6) est raccordée, par une broche transversale (14) retenue de façon fixe sur cette partie, à la partie (13) de raccordement de la broche, et les extrémités de la tige transversale (14), qui font saillie hors de la partie filetée de serrage (6), sont réalisées sous la forme de butées, qui limitent la rotation, pour une bague de blocage (8), qui est guidée sur la partie filetée de serrage (6) ou sur la partie (13) de raccordement de la broche et peut être accouplée à la partie (4) de guidage des mâchoires, avec blocage en rotation de manière à limiter le mouvement en rotation de cette partie.

7. Mandrin de perceuse à serrage automatique destiné à être utilisé sur une broche de perceuse à marteau, comportant des mâchoires (2), une partie (4) de guidage des mâchoires, qui guide les mâchoires (2) du mandrin dans une position inclinée par rapport à l'axe (3) du mandrin, et une partie filetée de serrage (6), qui porte un filetage de serrage (5) servant à déplacer les mâchoires de serrage (2), la partie (4) de guidage des mâchoires et la partie filetée de serrage (6) étant guidées l'une sur l'autre de manière à pouvoir tourner l'une par rapport à l'autre et prenant appui l'une sur l'autre selon une liaison de transmission de la force de serrage, caractérisé en ce que la partie filetée de serrage (6) prend appui avec blocage en rotation et avec un jeu axial de déplacement, sur la partie rotative (1') de la broche de perceuse à marteau, et que la partie (4) de guidage des mâchoires possède une butée axiale (16) pour la partie (1″), qui applique les chocs, de la broche de perceuse à marteau.

Fig. 1

Fig. 2

Fig. 3

Fig. 4